# EUROPEAN PATENT APPLICATION

(11) **EP 4 325 185 A1**
(43) Date of publication of application: **21.02.2024**
(21) Application number: 21936379.3
(22) Date of filing: 14.04.2021
(51) Int. Cl.: G01J 3/28, G01J 3/02

(54) **CORRECTION METHOD FOR SPECTRAL IMAGING DEVICE, AND SPECTRAL IMAGING DEVICE**

(71) Applicant: Yusense Information Technology and Equipment (Qingdao) Inc., Qingdao, Shandong 266000 (CN)
(72) Inventor: ZHANG, Junqiang, Qingdao, Shandong 266000 (CN); LI, Xianfeng, Qingdao, Shandong 266000 (CN); YANG, Bin, Qingdao, Shandong 266000 (CN); XIN, Jiuyuan, Qingdao, Shandong 266000 (CN)
(74) Representative: Prinz & Partner mbB
(86) International application number: PCT/CN2021/087145
(87) International publication number: WO 2022/217486

(57) **Abstract**

A correction method for a spectral imaging device, and a spectral imaging device, said method comprising: first, obtaining target light and ambient light, and labeling a characteristic spectrum for the obtained ambient light (S10); sampling the target light by means of a first region (201) of a sampling opening (20), obtaining spectral information of the target light and performing imaging by means of a spectral imaging device, and obtaining a first imaging result, sampling the labeled ambient light by means of a second region (202) of the sampling opening (20), obtaining spectral information of the labeled ambient light and performing imaging by means of the spectral imaging device, and obtaining a second imaging result (S11); obtaining a relationship between a characteristic spectrum position in the second imaging result and a characteristic spectrum position in the ambient light according to the second imaging result, and performing correction on spectral information of each pixel of the first imaging result according to said relationship (S12). The present invention can synchronously obtain target light and ambient light, perform spectral imaging, and perform correction on target light imaging according to an ambient light imaging result, and calibration and correction on an imaging spectrum can be performed in real time during photographing.

## Description

### FIELD

The present application relates to the field of spectral calibration and correction, as well as radiometric calibration and correction, and in particular to a spectral imaging device and a method for calibrating the spectral imaging device.

### BACKGROUND

Hyperspectral imagers are capable of acquiring continuous spectrum information and image information for a target and are widely applied in agriculture, ecology, land resources and other fields. Spectral correction and radiometric correction form the basis for quantitative remote sensing of the hyperspectral imagers. In practice, spaceborne, airborne and ground-based hyperspectral imagers are all subjected to rigorous spectral calibration and radiometric calibration in the laboratory, and are corrected during use. Generally, the calibration and the correction are performed separately. That is, the spectral calibration and correction, or the radiometric calibration and correction fails to be performed simultaneously in actual remote sensing and imaging, resulting in failure to monitor and adapt to, in real time, a change in spectrum and radiation, and an impact on the spectrum and radiation measurement due to a change in ambient during the remote sensing and imaging.

### SUMMARY

A spectral imaging device and a method for calibrating the spectral imaging device are provided, to perform calibration and correction simultaneously so as to adapt to changes in spectrum in real time during the imaging.

The following technical solutions are provided according to the present disclosure for the above purpose.

A method for calibrating a spectral imaging device is provided according to an embodiment of the present disclosure. The method includes: acquiring target light and ambient light, and highlighting a feature spectrum in the acquired ambient light; sampling the target light at a first region of a sampling port, acquiring, by a spectral imaging device, spectral information of the sampled target light, and generating, by the spectral imaging device, a first imaging result for the sampled target light; and sampling the ambient light in which the feature spectrum is highlighted at a second region of the sampling port, acquiring, by the spectral imaging device, spectral information of the ambient light in which the feature spectrum is highlighted, and generating, by the spectral imaging device, a second imaging result for the ambient light in which the feature spectrum is highlighted; and acquiring a relationship between a spectral position of the feature spectrum in the second imaging result and a spectral position of the feature spectrum in the ambient light based on the second imaging result, and correcting spectral information at each pixel in the first imaging result based on the relationship.

In an embodiment, the highlighting a feature spectrum in the acquired ambient light includes: adding one or more feature wavelengths of light to the acquired ambient light to highlight the feature spectrum; or filtering out one or more feature wavelengths of light from the acquired ambient light to highlight the feature spectrum.

In an embodiment, the acquiring a relationship between a spectral position of the feature spectrum in the second imaging result and a spectral position of the feature spectrum in the ambient light based on the second imaging result includes: acquiring a central wavelength and a bandwidth of the feature spectrum in the second imaging result based on the second imaging result; and acquiring, based on the central wavelength and the bandwidth of the feature spectrum in the second imaging result as well as a central wavelength and a bandwidth of the feature spectrum of the ambient light, the relationship between the spectral position of the feature spectrum in the second imaging result and the spectral position of the feature spectrum of the ambient light.

In an embodiment, the correcting spectral information at each pixel in the first imaging result based on the relationship includes: correcting a position of a central wavelength at the pixel based on the relationship between the spectral position of the feature spectrum in the second imaging result and the spectral position of the feature spectrum of the ambient light.

In an embodiment, the method further includes: measuring, before the ambient light in which the feature spectrum is highlighted is sampled by the sampling port, radiation intensity for the ambient light in which the feature spectrum is highlighted; correcting a position of a center wavelength at each pixel in the second imaging result based on the relationship between the spectral position of the feature spectrum in the second imaging result and the spectral position of the feature spectrum of the ambient light; correcting radiation intensity of the central wavelength at the pixel in the second imaging result based on the measured radiation intensity, after the position of the central wavelength at the pixel in the second imaging result is corrected; correcting a position of a central wavelength at the pixel in the first imaging result based on the relationship between the spectral position of the feature spectrum in the second imaging result and the spectral position of the feature spectrum of the ambient light; and correcting, based on an amount by which the radiation intensity of the central wavelength at the pixel in the second imaging result is corrected after the position of the central wavelength at the pixel in the second imaging result is corrected, radiation intensity of the central wavelength at the pixel in the first imaging result after the position of the central wavelength at the pixel in the first imaging result is corrected.

In an embodiment, the sampling port is a slit, and the second region is located at one end of the slit.

A spectral imaging device is provided according to an embodiment of the present disclosure, and is configured to perform method for calibrating a spectral imaging device. The spectral imaging device includes a first acquisition device, a second acquisition device, a sampling port and an imaging apparatus. The first acquisition device is configured to acquire target light. Second acquisition device is configured to acquire ambient light and highlight a feature spectrum in the acquired ambient light. The sampling port is configured to sample the target light at a first region and sample the ambient light in which the feature spectrum is highlighted at a second region. The imaging apparatus is configured to acquire spectral information of the target light and generate a first imaging result for the target light, and acquire spectral information of the ambient light in which the feature spectrum is highlighted and generate a second imaging result for the ambient light in which the feature spectrum is highlighted.

In an embodiment, the second acquisition device is further configured to: add one or more feature wavelengths of light to the ambient light so as to highlight the feature spectrum; or filter out one or more feature wavelengths of light from the ambient light so as to highlight the feature spectrum.

In an embodiment, the second acquisition device is further configured to measure radiation intensity for the ambient light in which the feature spectrum is highlighted before the ambient light is sampled by the sampling port.

In an embodiment, the imaging apparatus is further configured to generate, on a same light-sensitive surface, the first imaging result for the target light and the second imaging result for the ambient light in which the feature spectrum is highlighted.

As can be seen from the above technical solutions, with the method for calibrating a spectral imaging device according to the present disclosure, target light and ambient light are acquired. A feature spectrum in the ambient light is highlighted. The target light is sampled at a first region of a sampling port, and the spectral imaging device acquires spectral information of the sampled target light and generates a first imaging result for the sampled target light. Further, the ambient light in which the feature spectrum is highlighted is sampled at a second region of the sampling port, and the spectral imaging device acquires spectral information of the ambient light in which the feature spectrum is highlighted and generates a second imaging result for the ambient light in which the feature spectrum is highlighted. Then, a relationship between a spectral position of the feature spectrum in the second imaging result and a spectral position of the feature spectrum the ambient light is acquired based on the second imaging result, and spectral information at each pixel in the first imaging result is corrected based on the relationship.

With the method for calibrating a spectral imaging device according to the present disclosure, the target light is sampled at the first region of the sampling port and the ambient light in which the feature spectrum is highlighted is sampled at the second region of the sampling port, so that spectral imaging for the target light and spectral imaging for the ambient light can be simultaneously performed. Further, the imaging result for the target light can be corrected based on the imaging result for the ambient light, thereby performing spectral calibration and spectral correction in real time during the imaging.

The spectral imaging device according to the present disclosure has the same advantageous effects.

### BRIEF DESCRIPTION OF THE DRAWINGS

In order to more clearly illustrate technical solutions in the embodiments of the present disclosure or in the conventional technology, the accompanying drawings used in the description of the embodiments or the conventional technology are described briefly hereinafter. It is apparent that the accompanying drawings in the following description illustrate only some embodiments of the present disclosure, and other drawings may be obtained by those skilled in the art on the basis of the accompanying drawings without any creative efforts.
Figure 1 a flowchart illustrating a method for calibrating a spectral imaging device according to an embodiment of the present disclosure;
Figure 2 is a schematic diagram illustrating a sampling port according to an embodiment of the present disclosure;
Figure 3 is a schematic diagram illustrating regions in which imaging results for target light and ambient light through the sampling port shown in Figure 2 are formed on a light-sensitive surface;
Figure 4 a flowchart illustrating a method for calibrating a spectral imaging device according to a further embodiment of the present disclosure;
Figure 5 is a schematic diagram illustrating comparison between a spectrum of ambient light before spectral correction and a spectrum of the ambient light after spectral correction according to an embodiment of the present disclosure;
Figure 6(a) is a schematic diagram illustrating a spectrum of ambient light before a feature spectrum in the ambient light is highlighted according to an embodiment of the present disclosure;
Figure 6(b) is a schematic diagram illustrating a spectrum of light produced by a narrow-band light according to an embodiment of the present disclosure;
Figure 6(c) is a schematic diagram illustrating a spectrum of the ambient light after the feature spectrum in the ambient light is highlighted by the narrow-band light source shown in Figure 6(b);
Figure 7(a) is a schematic diagram illustrating a curve showing transmittance of a light filter according to an embodiment of the present disclosure;
Figure 7(b) is a schematic diagram illustrating a spectrum of the ambient light after the feature spectrum in the ambient light is highlighted by the light filter shown in Figure 7(a); and
Figure 8 is a schematic diagram illustrating a spectral imaging device according to an embodiment of the present disclosure.

### DETAILED DESCRIPTION OF THE EMBODIMENTS

The technical features in the embodiments of the present disclosure are clearly and completely described below in conjunction with the accompanying drawings in the embodiments of the present disclosure, so that those skilled in the art can better understand the technical solutions according to the present disclosure. Apparently, the embodiments described are only part rather than all of the embodiments of the present disclosure. Based on the embodiments in the present disclosure, all other embodiments obtained by those skilled in the art without creative efforts shall fall within the scope of protection of the present disclosure.

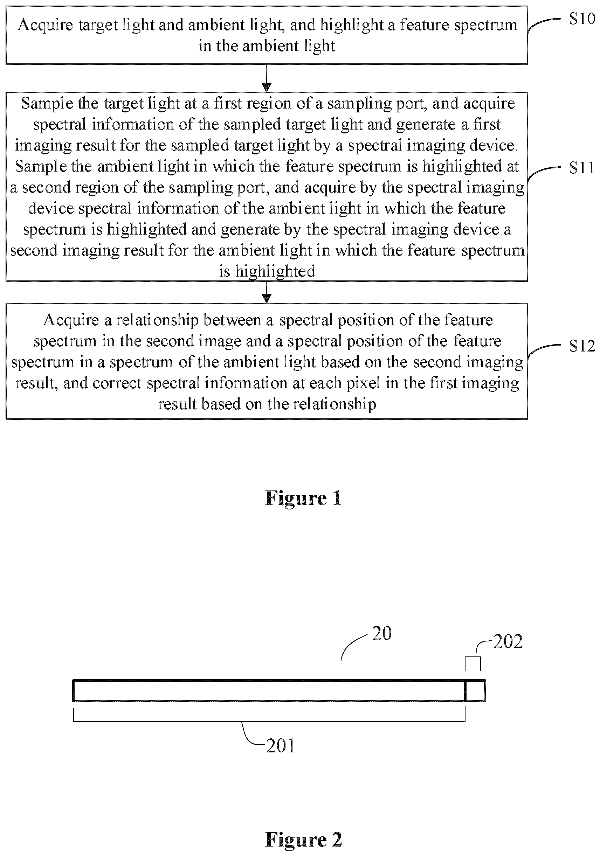

Reference is made to Figure 1, which is a flowchart illustrating a method for calibrating a spectral imaging device according to an embodiment of the present disclosure. As can be seen from Figure 1, the method for calibrating a spectral imaging device includes the followings steps S10 to S12.

In step S 10, target light and ambient light are acquired, and a feature spectrum in the ambient light is highlighted.

The feature spectrum is distinguishable from a spectrum of the ambient light.

In step S 11, the target light is sampled at a first region of a sampling port, and the spectral imaging device acquires spectral information of the sampled target light and generates a first imaging result for the sampled target light. Further, the ambient light in which the feature spectrum is highlighted is sampled at a second region of the sampling port, and the spectral imaging device acquires spectral information of the ambient light in which the feature spectrum is highlighted and generates a second imaging result for the ambient light in which the feature spectrum is highlighted.

Spectral information of light includes at least light wavelengths and their respective radiation intensities. The imaging result formed depending on the acquisition of spectral information of light represents the spectral information.

The first region of the sampling port is independent from the second region of the sampling port and does not overlap the second region of the sampling port. The target light hits the first region of the sampling port, and passes through the first region of the sampling port. The target light acquires the spectral information of the target light, and generates the first imaging result based on the acquired spectral information of the target light. The ambient light hits the second region of the sampling port, and passes through the second region of the sampling port. The target light acquires the spectral information of the ambient light in which the feature spectrum is highlighted, and generates the second imaging result based on the acquired the spectral information of the ambient light.

In step S12, a relationship between a spectral position of the feature spectrum in the second imaging result and a spectral position of the feature spectrum the ambient light is acquired based on the second imaging result, and spectral information at each pixel in the first imaging result is corrected based on the relationship.

The spectral position of the feature spectrum in the second imaging result refers to a band of the feature spectrum represented in the second imaging result. The spectral position of the feature spectrum in the ambient light refers to a band of the feature spectrum actually highlighted in the ambient light.

The spectral position of the feature spectrum in the second imaging result is acquired based on the second imaging result, and then the relationship between the spectral position of the feature spectrum in the second imaging result and the spectral position of the feature spectrum of the ambient light is acquired. The spectral information at each pixel in the first imaging result corresponding to the target light is corrected based on the relationship between the spectral position of the feature spectrum in the second imaging result and the spectral position of the feature spectrum of the ambient light.

With the method for calibrating a spectral imaging device according to the embodiment, the target light is sampled at the first region of the sampling port and the ambient light in which the feature spectrum is highlighted is sampled at the second region of the sampling port, so that spectral imaging for the target light and spectral imaging for the ambient light can be simultaneously performed. Further, the imaging result for the target light can be corrected based on the imaging result for the ambient light, thereby performing spectral calibration and spectral correction in real time during the imaging.

The method for calibrating a spectral imaging device is described in detail below in conjunction with specific embodiments. Referring to Figure 1, the method for calibrating a spectral imaging device includes the following steps S10 to S12.

In step S10, target light and ambient light are acquired, and a feature spectrum in the ambient light is highlighted.

In an embodiment, one or more feature wavelengths of light may be added to the ambient light so as to highlight the feature spectrum. Alternatively, one or more feature wavelengths of light in the ambient light are filtered out so as to highlight the feature spectrum. In practice, the feature wavelengths are selected based on an operating band range of the spectral imaging device, so as to highlight the feature spectrum in the ambient light.

Alternatively, distinct and stable spectral bands in the ambient light may be determined as the feature spectrum, so that the feature spectrum is highlighted without adding feature wavelengths of light to the ambient light or filtering out wavelengths of light in the ambient light.

In step S11, the target light is sampled at a first region of a sampling port, and the spectral imaging device acquires spectral information of the sampled target light and generates a first imaging result for the sampled target light. Further, the ambient light is sampled at a second region of the sampling port, and the spectral imaging device acquires spectral information of the sampled ambient light and generates a first imaging result for the sampled ambient light.

The first region of the sampling port is independent from the second region of the sampling port and does not overlap the second region of the sampling port. In an embodiment, the sampling port is a slit and the second region is arranged at one end of the slit. Only one second region may be arranged at the end of the slit. Alternatively, two second regions are arranged at both ends of the slit, respectively. The second region is shorter than the first region along a length direction of the slit. The second region may be short, for example, corresponding to a few or a dozen pixels on a light-sensitive surface of the imaging device. Reference is to Figure 2, which is a schematic diagram illustrating the sampling port according to this embodiment. The second region 202 is located at one end of the sampling port 20, and is shorter than the first region 201.

The target light is filtered into the spectral imaging device through the first region of the sampling port, and is subjected to dispersion, and then an imaging result for the target light is formed on the light-sensitive surface of the spectral imaging device. The ambient light in which the feature spectrum is highlighted is filtered into the spectral imaging device through the second region of the sampling port, and is subjected to dispersion, and then an imaging result for the ambient light is formed on the light-sensitive surface of the spectral imaging device.

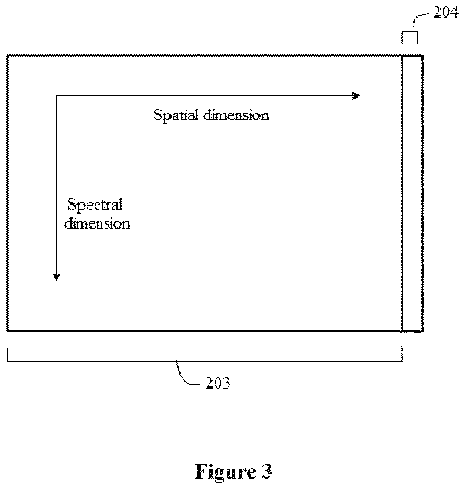

In an embodiment, the imaging result for the target light and the imaging result for the ambient light in which the feature spectrum is highlighted may be formed on a same light-sensitive surface. In this case, in the spatial dimension, a region in which the imaging result for the target light is formed corresponds to the first region of the sampling port in size and position, and a region in which the imaging result for the ambient light is formed corresponds to the second region of the sampling port in size and position. In a spectral dimension, the spectrum of the target light subjected to the dispersion performed by the spectral imaging device and the spectrum of the ambient light subjected to the dispersion performed by the spectral imaging device are contiguous on the light-sensitive surface. Reference is made to Figure 3, which is a schematic diagram illustrating regions in which imaging results for target light and ambient light through the sampling port shown in Figure 2 are respectively formed on a light-sensitive surface. Apparently, in the spatial dimension, a region 203 in which the imaging result for the target light is formed corresponds to the first region 201 of the sampling port 20 in size and position, and a region 204 in which the imaging result for the ambient light is formed corresponds to the second region 202 of the sampling port 20 in size and position.

The target light is sampled at the first region of the sampling port and the ambient light is sampled at the second region of the sampling port, so that the spectral imaging for the target light and the spectral imaging for the ambient light are simultaneously performed by the spectral imaging device. Then, the spectral information represented by the imaging result for the target light is corrected based on the imaging result for the ambient light in which the feature spectrum is highlighted, thereby performing correction in real time during the imaging.

In step S12, a relationship between a spectral position of the feature spectrum in the second imaging result and a spectral position of the feature spectrum the ambient light is acquired based on the second imaging result, and spectral information at each pixel in the first imaging result is corrected based on the relationship.

In an embodiment, the relationship between the spectral position of the feature spectrum in the second imaging result and the spectral position of the feature spectrum of the ambient light is acquired through the following steps S120 to S121.

In step S120, a central wavelength and a bandwidth of the feature spectrum in the second imaging result are acquired based on the second imaging result.

The central wavelength and the bandwidth of the feature spectrum in the second imaging result are obtained based on radiation intensities of respective pixels in the second imaging result, for example, by performing curve fitting on the radiation intensities of respective pixels.

In step S121, the relationship between the spectral position of the feature spectrum in the second imaging result and the spectral position of the feature spectrum of the ambient light is acquired based on the central wavelength and the bandwidth of the feature spectrum in the second imaging result as well as a central wavelength and a bandwidth of the feature spectrum of the ambient light.

The spectral position of the feature spectrum in the second imaging result is linearly or non-linearly related to the spectral position of the actual feature spectrum of the ambient light. The relationship between the spectral position of the feature spectrum in the second imaging result and the spectral position of the feature spectrum of the ambient light is acquired based on the central wavelength and the bandwidth of the feature spectrum in the second imaging result and the central wavelength and the bandwidth of the actual feature spectrum of the ambient light. For example, the spectral position of the feature spectrum in the second imaging result is linearly related to the spectral position of the actual feature spectrum of the ambient light, i.e. the spectral position of the feature spectrum in the second imaging result is subjected to a translation of an amount relative to the spectral position of the actual feature spectrum in the ambient light.

The correction of the spectral information at each pixel in the first imaging result includes correction of a spectral position at the pixel in the first imaging result. A position of the center wavelength of the pixel in the first imaging result corresponding to the target light is corrected based on the relationship between the spectral position of the feature spectrum in the second imaging result and the spectral position of the feature spectrum of the ambient light, such that the spectral positions corresponding to all pixels in the first imaging result are corrected.

With the method for calibrating a spectral imaging device according to the embodiment, the target light is sampled at the first region of the sampling port and the ambient light in which the feature spectrum is highlighted is sampled at the second region of the sampling port, so that the spectral imaging for the target light and the spectral imaging for the ambient light can be simultaneously performed. Further, the spectral position in the imaging result for the target light is adapted to the change in the spectral position of the feature spectrum in the ambient light, thereby performing spectral calibration and spectral correction in real time during the imaging.

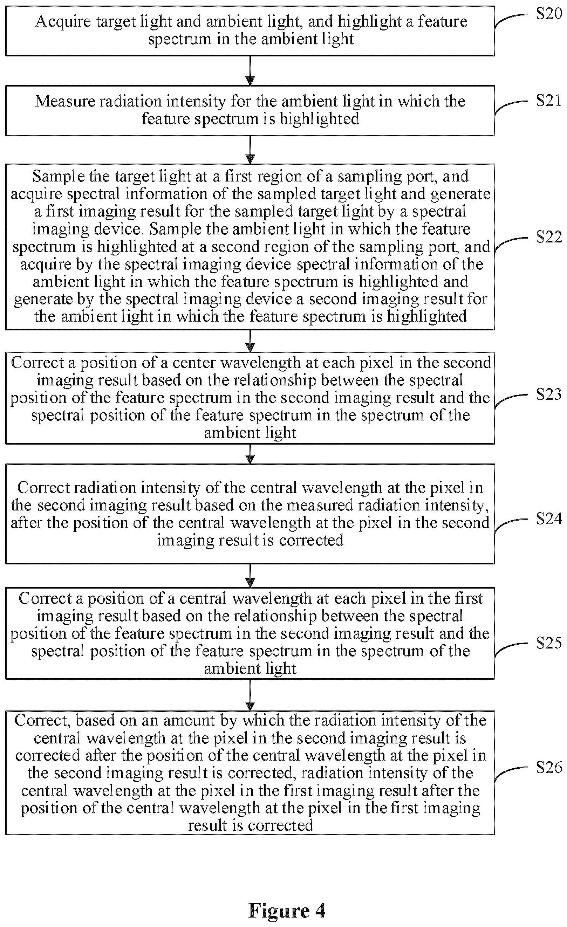

Reference is further made to Figure 4, which is a flowchart illustrating a method for calibrating a spectral imaging device according to a further embodiment of the present disclosure. As can be seen from Figure 4, the method for calibrating a spectral imaging device includes the following steps S20 to S26.

In step S20, target light and ambient light are acquired, and a feature spectrum in the ambient light is highlighted.

In step S21, radiation intensity is measured for the ambient light in which the feature spectrum is highlighted before the ambient light is sampled at a sampling port.

The feature spectrum in the ambient light is highlighted, and then the ambient light in which the ambient light has been highlighted is guided to a second region of the sampling port after the radiation intensity is measured for the ambient light in which the ambient light has been highlighted.

In step S22, the target light is sampled at a first region of the sampling port, and the spectral imaging device acquires spectral information of the sampled target light and generates a first imaging result for the sampled target light. Further, the ambient light is sampled at the second region of the sampling port, and the spectral imaging device acquires spectral information of the sampled ambient light and generates a first imaging result for the sampled ambient light.

For details about step S20 and step S22, reference is made to the description above.

In step S23, a position of a central wavelength at a pixel in the second imaging result is corrected based on the relationship between the spectral position of the feature spectrum in the second imaging result and the spectral position of the feature spectrum of the ambient light.

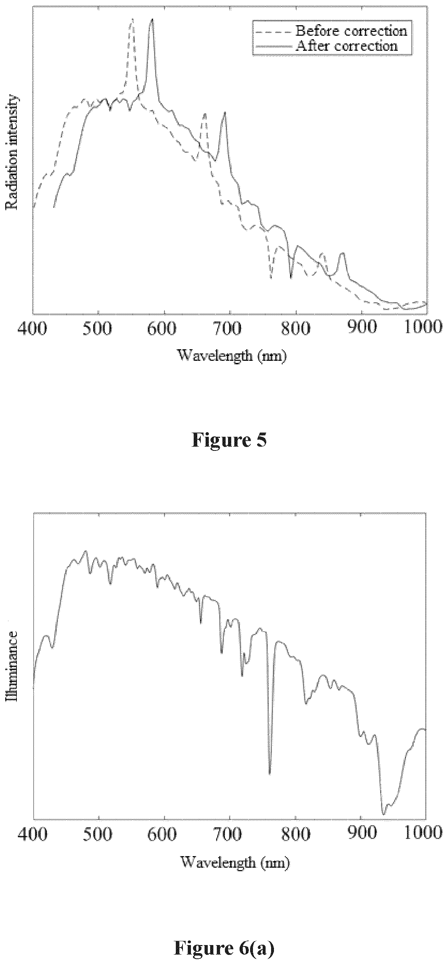

The position of the center wavelength of the pixel in the second imaging result corresponding to the ambient light in which the ambient light has been highlighted is corrected based on the relationship between the spectral position of the feature spectrum in the second imaging result and the spectral position of the feature spectrum of the ambient light, such that the spectral positions corresponding to all pixels in the second imaging result are corrected. Reference is made to Figure 5, which is a schematic diagram illustrating comparison between a spectrum of ambient light before spectral correction and a spectrum of the ambient light after spectral correction according to an embodiment of the present disclosure. A dashed line shows spectrum of the ambient before the correction of the spectral position and a solid line shows spectrum of the ambient after the correction of the spectral position. The spectral position in the imaging result for the ambient light is subjected to a translation of an amount relative to a spectral position of the actual feature spectrum in the ambient light.

In step S24, radiation intensity of a central wavelength at the pixel, in the second imaging result at which the position of the center wavelength is corrected, is corrected based on the radiation intensity measured for the ambient light in which the feature spectrum is highlighted before the ambient light is sampled at the sampling port.

After the position of the center wavelength at the pixel in the second imaging result corresponding to the ambient light in which the ambient light has been highlighted is corrected, radiation intensity at the pixel is corrected based on the radiation intensity measured for the ambient light before the ambient light is sampled at the sampling port. Therefore, radiation intensities of theoretical center wavelengths at respective pixels in the spectrum of the ambient light subjected to dispersion are corrected, thereby stabilizing a matrix formed by center wavelengths in spectrums of the ambient light subjected to dispersion acquired in all imaging results and remaining accuracy of the radiation information.

In step S25, a position of the central wavelength at the pixel in the first imaging result is corrected based on the relationship between the spectral position of the feature spectrum in the second imaging result and the spectral position of the feature spectrum in the ambient light.

The position of the central wavelength at the pixel in the first imaging result for the target light is corrected based on the relationship between the spectral position of the feature spectrum in the second imaging result and the spectral position of the feature spectrum in the ambient light to correct the spectral position of the pixels in the first imaging result, so that spectral positions at respective pixels in the first imaging result are corrected.

In step S26, radiation intensity corresponding to the central wavelength whose position has been corrected at the pixel in the first imaging result is corrected based on an amount by which radiation intensity corresponding to the central wavelength whose position has been corrected at the pixel in the second imaging result is corrected.

With the method for calibrating a spectral imaging device according to the embodiment, the target light is sampled at the first region of the sampling port and the ambient light is sampled at the second region of the sampling port, so that spectral imaging for the target light and spectral imaging for the ambient light can be simultaneously performed by the spectral imaging device. Then, the radiation intensities of the pixels in the imaging result for the target light are corrected based on the correction of the radiation intensities of the pixels in the imaging result for the ambient light.

With the method for calibrating a spectral imaging device according to the embodiment, the target light is sampled at the first region of the sampling port and the ambient light in which the feature spectrum is highlighted is sampled at the second region of the sampling port, so that spectral imaging for the target light and spectral imaging for the ambient light can be simultaneously performed. The spectral position in the imaging result of the target light can be corrected based on a change in the spectral position of the feature spectrum in the ambient light. The radiation intensity is measured for the ambient light in which the feature spectrum is highlighted is measured, and the radiation intensity in the imaging result for the target light can be corrected based on the change in radiation intensity in the imaging result for the ambient light. Therefore, spectral information and the radiation information in the imaging result for the target light can be corrected, so that the spectral calibration and correction, or the radiometric calibration and correction can be performed simultaneously in real time during the imaging.

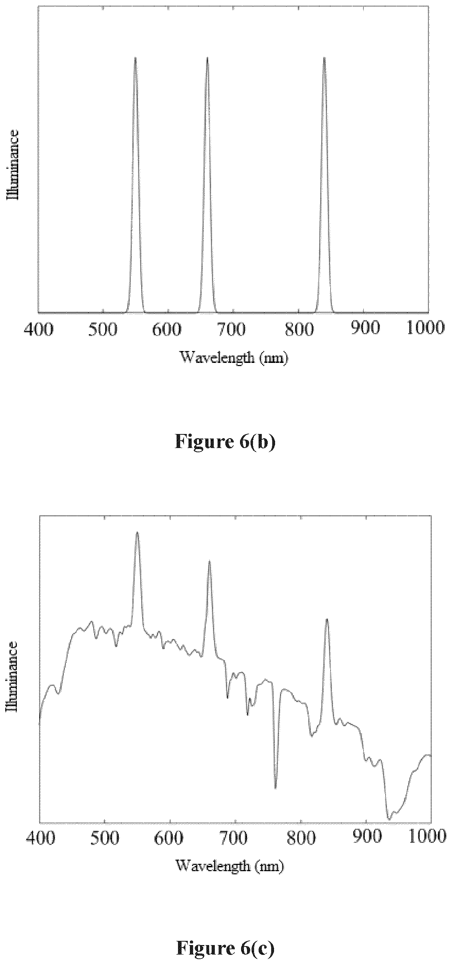

In an embodiment, the feature spectrum in the ambient light is highlighted by adding multiple feature wavelengths of light to the ambient light. Reference is made to Figures 6(a), Figure 6(b) and Figure 6(c). Figure 6(a) is a schematic diagram illustrating a spectrum of ambient light before a feature spectrum in the ambient light is highlighted. Figure 6(b) is a schematic diagram illustrating a spectrum of light produced by a narrow-band light source according to an embodiment of the present disclosure. Figure 6(c) is a schematic diagram illustrating a spectrum of the ambient light after the feature spectrum in the ambient light is highlighted by the narrow-band light source shown in Figure 6(b). In an embodiment, light with the feature spectrum emitted by multiple narrow-band LED light sources passes through a homogenizer, and then added to the ambient light, so as to highlight the feature spectrum in the ambient light.

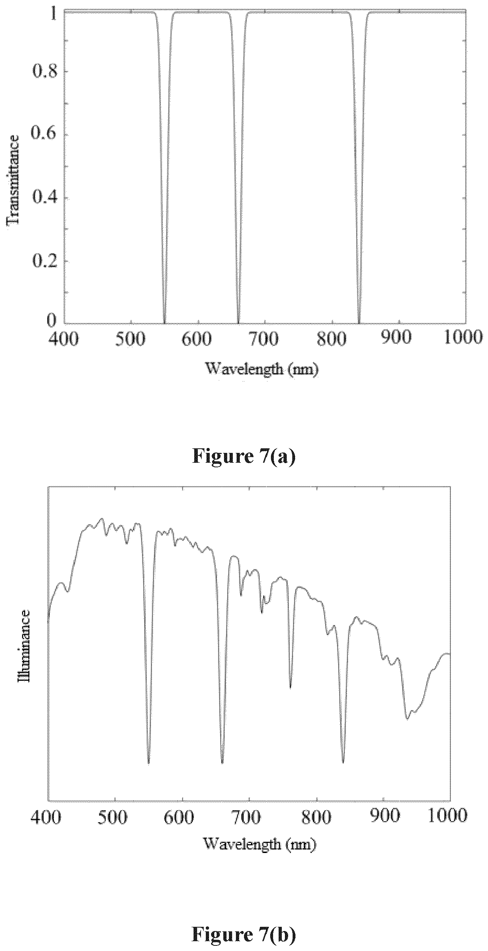

Alternatively, the feature spectrum in the ambient light is highlighted by filtering out multiple wavelengths of light from the ambient light. Reference is made to Figure 7(a) and Figure 7(b). Figure 7(a) is a schematic diagram illustrating a curve showing transmittance of a light filter according to an embodiment. Figure 7(b) is a schematic diagram illustrating a spectrum of the ambient light after the feature spectrum in the ambient light is highlighted by the light filter shown in Figure 7(a).

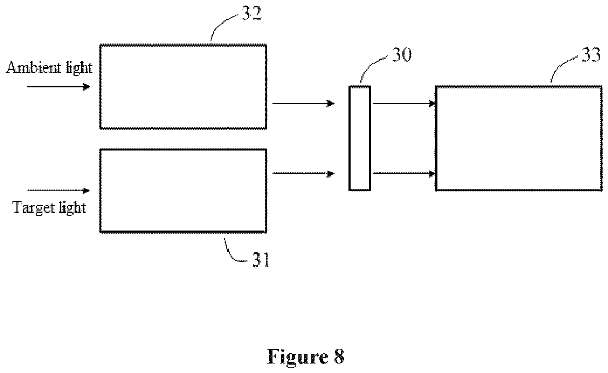

A spectral imaging device, to which the method for calibrating a spectral imaging device is applied, is provided according to an embodiment of the present disclosure. Reference is made to Figure 8, which is a schematic diagram illustrating the spectral imaging device according to the embodiment. As can be seen from Figure 8, the spectral imaging device includes a first acquisition device 31, a second acquisition device 32, a sampling port 30 and an imaging apparatus 33.

The first acquisition device 31 is configured to acquire target light. The second acquisition device 32 is configured to acquire ambient light and highlight a feature spectrum in the ambient light.

The sampling port 30 is configured to sample the target light at a first region and sample the ambient light in which the feature spectrum is highlighted at a second region. The imaging apparatus 33 is configured to acquire spectral information of the target light and generate a first imaging result for the target light, and acquire spectral information of the ambient light in which the feature spectrum is highlighted and generate a second imaging result for the ambient light in which the feature spectrum is highlighted.

The spectral imaging device according to the embodiment is configured to perform the method for calibrating a spectral imaging device. The target light is sampled at the first region of the sampling port and the ambient light in which the feature spectrum is highlighted is sampled at the second region of the sampling port, so that spectral imaging for the target light and spectral imaging for the ambient light can be simultaneously performed. Further, the formed imaging result for the target light can be corrected based on the imaging result for the ambient light, thereby performing spectral calibration and spectral correction in real time during the imaging.

In an embodiment, the second acquisition device 32 is further configured to add one or more feature wavelengths of light to the ambient light, so as to highlight the feature spectrum actively, for example, by a light source emitting the feature wavelengths of light.

In an embodiment, the second acquisition device 32 is further configured to filter out one or more feature wavelengths of light from the ambient light so as to highlight the feature spectrum passively, for example, by a light filter.

Further, the second acquisition device 32 is configured to measure radiation intensity for the ambient light in which the feature spectrum is highlighted before the ambient light is sampled at the sampling port 30. In an embodiment, the second acquisition device 32 may homogenize the ambient light in which the feature spectrum is highlighted by a light homogenizer and then measure the radiation intensity of the ambient light in which the feature spectrum is highlighted. The light homogenizer may include, but is not limited to, an integrating sphere, a cosine corrector or gross glass. In an embodiment, the spectral imaging device may further include a light guiding device configured to guide the acquired ambient light to the second region of the sampling port 30. The spectral imaging device may further include a storage device configured to store the first imaging result, the second imaging result and the corrected imaging result.

The spectral imaging device according to the embodiment may be a remote sensing hyperspectral imaging device. A telescope may serve as the first acquisition device.

The spectral imaging device and the method for calibrating the spectral imaging device according to the present disclosure are described in detail above. Embodiments are described herein to illustrate the principles and implementation of the present disclosure, and the above description of the embodiments is only for facilitating understanding the method of the present disclosure and core ideas thereof. It should be noted that several improvements and modifications may be made to the present disclosure by those skilled in the art without departing from the principles of the present disclosure, which also fall within the scope of protection of the claims of the present disclosure.

## Claims

1. A method for calibrating a spectral imaging device, comprising:
acquiring target light and ambient light, and highlighting a feature spectrum in the acquired ambient light;
sampling the target light at a first region of a sampling port, acquiring, by a spectral imaging device, spectral information of the sampled target light, and generating, by the spectral imaging device, a first imaging result for the sampled target light; and sampling the ambient light in which the feature spectrum is highlighted at a second region of the sampling port, acquiring, by the spectral imaging device, spectral information of the ambient light in which the feature spectrum is highlighted, and generating, by the spectral imaging device, a second imaging result for the ambient light in which the feature spectrum is highlighted; and
acquiring a relationship between a spectral position of the feature spectrum in the second imaging result and a spectral position of the feature spectrum in the ambient light based on the second imaging result, and correcting spectral information at each pixel in the first imaging result based on the relationship.

2. The method for calibrating a spectral imaging device according to claim 1, wherein the highlighting a feature spectrum in the acquired ambient light comprises:
adding one or more feature wavelengths of light to the acquired ambient light to highlight the feature spectrum; or
filtering out one or more feature wavelengths of light from the acquired ambient light to highlight the feature spectrum.

3. The method for calibrating a spectral imaging device according to claim 1, wherein the acquiring a relationship between a spectral position of the feature spectrum in the second imaging result and a spectral position of the feature spectrum in the ambient light based on the second imaging result comprises:
acquiring a central wavelength and a bandwidth of the feature spectrum in the second imaging result based on the second imaging result; and
acquiring, based on the central wavelength and the bandwidth of the feature spectrum in the second imaging result as well as a central wavelength and a bandwidth of the feature spectrum of the ambient light, the relationship between the spectral position of the feature spectrum in the second imaging result and the spectral position of the feature spectrum of the ambient light.

4. The method for calibrating a spectral imaging device according to claim 1, wherein the correcting spectral information at each pixel in the first imaging result based on the relationship comprises:
correcting a position of a central wavelength at the pixel based on the relationship between the spectral position of the feature spectrum in the second imaging result and the spectral position of the feature spectrum of the ambient light.

5. The method for calibrating a spectral imaging device according to claim 1, further comprising:
measuring, before the ambient light in which the feature spectrum is highlighted is sampled by the sampling port, radiation intensity for the ambient light in which the feature spectrum is highlighted;
correcting a position of a center wavelength at each pixel in the second imaging result based on the relationship between the spectral position of the feature spectrum in the second imaging result and the spectral position of the feature spectrum of the ambient light;
correcting radiation intensity of the central wavelength at the pixel in the second imaging result based on the measured radiation intensity, after the position of the central wavelength at the pixel in the second imaging result is corrected;
correcting a position of a central wavelength at the pixel in the first imaging result based on the relationship between the spectral position of the feature spectrum in the second imaging result and the spectral position of the feature spectrum of the ambient light; and
correcting, based on an amount by which the radiation intensity of the central wavelength at the pixel in the second imaging result is corrected after the position of the central wavelength at the pixel in the second imaging result is corrected, radiation intensity of the central wavelength at the pixel in the first imaging result after the position of the central wavelength at the pixel in the first imaging result is corrected.

6. The method for calibrating a spectral imaging device according to any one of claims 1 to 5, wherein the sampling port is a slit and the second region is located at one end of the slit.

7. A spectral imaging device, configured to perform the method for calibrating a spectral imaging device according to any one of claims 1 to 6, wherein the spectral imaging device comprises:
a first acquisition device configured to acquire target light;
a second acquisition device configured to acquire ambient light and highlight a feature spectrum in the acquired ambient light;
a sampling port configured to sample the target light at a first region and sample the ambient light in which the feature spectrum is highlighted at a second region; and
an imaging apparatus configured to acquire spectral information of the target light and generate a first imaging result for the target light, and acquire spectral information of the ambient light in which the feature spectrum is highlighted and generate a second imaging result for the ambient light in which the feature spectrum is highlighted.

8. The spectral imaging device according to claim 7, wherein the second acquisition device is further configured to:
add one or more feature wavelengths of light to the ambient light so as to highlight the feature spectrum; or
filter out one or more feature wavelengths of light from the ambient light so as to highlight the feature spectrum.

9. The spectral imaging device according to claim 7, wherein the second acquisition device is further configured to measure radiation intensity for the ambient light in which the feature spectrum is highlighted before the ambient light is sampled by the sampling port.

10. The spectral imaging device according to claim 7, wherein the imaging apparatus is further configured to generate, on a same light-sensitive surface, the first imaging result for the target light and the second imaging result for the ambient light in which the feature spectrum is highlighted.
